# EUROPÄISCHE PATENTANMELDUNG

(11) **EP 3 231 588 A1**
(43) Veröffentlichungstag der Anmeldung: **18.10.2017**
(21) Anmeldenummer: 16164854.8
(22) Anmeldetag: 12.04.2016
(51) Int. Cl.: B29C 67/00, B33Y 70/00

(54) **SPRÜHGETROCKNETES WEICHPHASENEMULSIONSPOLYMERISAT FÜR DAS AUFFÜLLEN DER ZWICKEL IN PERLPOLYMERISATSCHICHTEN IM BINDER JETTING VERFAHREN**

(71) Anmelder: Evonik Röhm GmbH, 64293 Darmstadt (DE)
(72) Erfinder: POPPE, Dirk, 60599 Frankfurt am Main (DE); FRUTH, Andrea, 65197 Wiesbaden (DE); BERNHARDT, Stefan, 63075 Offenbach (DE); WIEBER, Stephan, 76137 Karlsruhe (DE)

(57) **Zusammenfassung**

Die vorliegende Erfindung betrifft das technische Gebiet des 3D-Drucks, insbesondere in Form des Binder Jetting Verfahrens, bei dem Partikel in einem Pulverbett mittels eines verdruckten Klebstoffs zu einem dreidimensionalen Objekt verklebt werden. Bei den Partikeln kann es sich dabei um anorganische Materialien, wie z.B. Sand oder ein Metallpulver, oder um polymere Partikel, wie zum Beispiel Polymethacrylate oder Polyamide, handeln. Polymethacrylate können dazu beispielsweise als Suspensionspolymerisate, so genannte Perlpolymerisate, vorliegen.

## Beschreibung

### Gebiet der Erfindung

Die vorliegende Erfindung betrifft das technische Gebiet des 3D-Drucks, insbesondere in Form des Binder Jetting Verfahrens, bei dem Partikel in einem Pulverbett mittels eines verdruckten Klebstoffs zu einem dreidimensionalen Objekt verklebt werden. Bei den Partikeln kann es sich dabei um anorganische Materialien, wie z.B. Sand oder ein Metallpulver, oder um polymere Partikel, wie zum Beispiel Polymethacrylate oder Polyamide, handeln. Polymethacrylate können dazu beispielsweise als Suspensionspolymerisate, so genannte Perlpolymerisate, vorliegen.

Die vorliegende Erfindung betrifft dabei insbesondere Mischungen von Emulsions- und Suspensionspolymerisaten als Pulver für den 3D-Druck, die sich vom Stand der Technik dadurch unterscheiden, dass die Emulsionspolymerisate sprühgetrocknet oder in Anwesenheit eines Suspensionspolymerisates gefällt wurden. Dadurch entstehen Pulver mit einer Schüttdichte, die höher als bei reinen Suspensionspolymerisaten ist. Damit werden die Vorteile eines schnellen Auflösen bei Kontakt mit dem verdruckten Bindemittel und einer sich dadurch ergebenden Viskositätszunahme bzw. einer größeren Menge applizierbaren Bindemittels in kürzerer Zeit mit den Vorteilen einer höheren Schüttdichte und damit einem geringeren Volumen an Bindemittel, das eingesetzt werden muss, kombiniert. Ein großer Vorteil dieses Vorgehens ist darüber hinaus, dass ein Produkt mit weniger Verzug gebildet wird.

### Stand der Technik

Binder Jetting ist ein additiver Produktionsprozess, der auch unter dem das Verfahren gut beschreibenden Begriff 3D-Tintenstrahl-Pulverdruck bekannt ist. Bei diesem Verfahren wird ein flüssiges Bindemittel, beispielsweise mittels eines handelsüblichen Inkjet-Druckkopfs, auf eine Pulverschicht aufgetragen und damit gezielt ein Teil dieser Pulverschicht miteinander verbunden. Durch das im Wechsel mit diesem Auftragen erfolgende Aufbringen neuer Pulverschichten wird letztendlich ein dreidimensionales Produkt geformt. Beim Binder Jetting können verschiedene Materialien als Bindemittel und als Pulvermaterial eingesetzt werden. Als Pulvermaterialien sind beispielsweise Polymerpartikel, Sand, Keramikpartikel oder Metallpulver mit einem jeweiligen Durchmesser zwischen 10 und wenigen 100 µm geeignet. Bei der Verwendung von Sand entfällt zumeist eine Nachbearbeitung des fertigen Gegenstandes. Bei anderen Materialien, wie zum Beispiel den Polymerpulvern wie u.a. PMMA, kann ein nachträgliches Härten, Sintern und/oder Infiltrieren des Gegenstandes nötig sein. Eine solche nachträgliche Bearbeitung ist jedoch eigentlich unerwünscht, da sie zeit- bzw. kostenaufwendig ist und aufgrund eines oft auftretenden Schrumpfs zu einer negativen Beeinflussung der Dimensionsstabilität führen kann.

Das Aufbringen des Bindemittels erfolgt in der Regel analog dem herkömmlichen zweidimensionalen Papierdruck. Beispiele für Bindemittelsysteme sind flüssige vinylische Monomere, die mittels in dem Pulvermaterial enthaltenen Peroxiden ausgehärtet werden. Alternativ oder zusätzlich enthält das Pulvermaterial einen die Aushärtung beschleunigenden bzw. erst bei der Umgebungstemperatur ermöglichenden Katalysator. Beispiele für einen solchen Katalysator für Acrylatharze bzw. -monomere mit Peroxiden als Initiator stellen Amine, insbesondere tertiäre Amine dar.

Gegenüber anderen 3D-Druckverfahren wie FDM oder SLS, die auf einem Aufschmelzen oder Verschweißen des das Produkt bildenden Materials basieren, hat das Binder Jetting große Vorteile. So ist dieses Verfahren von allen bekannten Verfahren am besten geeignet, farbige Objekte ohne nachträgliche Farbgebung direkt zu realisieren. Auch ist insbesondere dieses Verfahren dazu geeignet, besonders große Gegenstände herzustellen. So sind Produkte bis hin zu einer Zimmergröße beschrieben. Weiterhin sind andere Verfahren bezüglich des gesamten Druckvorgangs bis zum fertigen Objekt auch sehr zeitintensiv. Abgesehen von der eventuell nötigen Nachbearbeitung kann das Binder Jetting im Vergleich zu den anderen Verfahren sogar als besonders zeiteffizient betrachtet werden.
Darüber hinaus hat das Binder Jetting den großen Vorteil gegenüber anderen Verfahren, dass es ohne Hitzezufuhr erfolgt. Bei Verfahren, die mittels Aufschmelzen oder Verschweißen erfolgen, entstehen im Produkt durch diesen ungleichmäßigen Wärmeeintrag Spannungen, die zumeist in Folgeschritten wie einer thermischen Nachbehandlung, die weiteren Zeit- und Kostenaufwand bedeuten, wieder aufgelöst werden müssen.

Nachteilig am Binder Jetting ist die verfahrensbedingte Porosität des Produktes. So werden für mittels Binder-Jetting gedruckte Objekte nur Zugfestigkeiten erreicht, die ca. 20 mal geringer sind als die spritzgegossener Formteile aus einem vergleichbaren Material. Aufgrund dieses Nachteils wird das Binder Jetting Verfahren bis dato überwiegend zur Herstellung von Dekorstücken oder zur Abformung von Sandformen eingesetzt. Die Porosität ergibt sich vor allem aus der Tatsache, dass bei bekannten Druckverfahren nur ein Teil der Hohlräume zwischen den Partikeln mit dem Bindemittel aufgefüllt werden. Dies ergibt sich zwangsläufig aus der geringen Viskosität der aufgedruckten, flüssigen Bindemittel. Sollte mehr aufgetragen werden, so verläuft dies direkt vor und auch während des beginnenden Aushärtens in Nachbarpartikel bzw. Hohlräume zwischen den Partikeln (so genannte Zwickel). Dies wiederum führt zu einem ungenauen, unsauberen Druckbild bzw. zu einer geringen Oberflächengenauigkeit am fertigen Gegenstand.

J. Presser beschreibt in seiner Dissertation "Neue Komponenten für das generative Fertigungsverfahren des 3D-Drucks" (TU Darmstadt, 2012) die Verwendung von gefällten Emulsionspolymerisaten als Pulver für das Binder-Jetting-Verfahren. Diese Emulsionpolymerisate füllen dazu teilweise die Zwischenräume zwischen den eigentlichen Partikeln und führen damit zu einer Reduktion der Porosität. Die Aufarbeitung über Koagulation, Trocknung und Siebung führt aber zu nicht runden Sekundärpartikeln unregelmäßiger Größenverteilung. Weiterhin hat sich gezeigt, dass die so eingesetzten Emulsionspolymerisate die Schüttdichte kaum erhöhen und in Bezug auf die Stabilität des gedruckten Objekts keinen nennenswerten Einfluss haben.

### Aufgabe

Die der vorliegenden Erfindung zugrunde liegende Aufgabe war es, das Binder Jetting Verfahren dadurch zu beschleunigen, dass es möglich ist, Kunststoffpartikel zu verdrucken, ohne dass eine zeitaufwendige Nachbearbeitung des Produktes erfolgen muss.

Weiterhin war es Aufgabe, die mechanische Stabilität von Produkten eines Binder Jetting Verfahrens, insbesondere solche auf Basis eines Polymerpulvers, insbesondere eines PMMA-Pulvers, derart zu verbessern, dass diese als Funktionsteile eingesetzt werden können.

Insbesondere war es Aufgabe in diesem Zusammenhang, Formteile zu realisieren, die zumindest 50% der Zugfestigkeit eines analogen spritzgegossenen Teils aufweisen. "Analog" bedeutet in diesem Fall beispielsweise, dass ein spritzgegossener PMMA-Formkörper mit einem Binder Jetting-Produkt auf Basis eines PMMA-Pulvers verglichen wird.

Weitere nicht explizit genannte Aufgaben können sich aus der Beschreibung, den Beispielen oder den Ansprüchen der vorliegenden Anmeldung, bzw. aus dem Gesamtzusammenhang derselben ergeben.

### Lösung

Überraschend wurden diese Aufgaben mittels eines neuartigen Verfahrens zur Herstellung von dreidimensionalen Objekten aus einem Pulverbett mittels einem Binder Jetting Verfahren gelöst. In diesem Verfahren wird durch mehrfaches Wiederholen der Verfahrensschritte a) und b) ein dreidimensionales Objekt gebildet. Bei Verfahrensschritt a) handelt es sich um das Aufbringen einer Pulverschicht auf der Oberfläche. Erfindungsgemäß weist das Pulverbett dabei mindestens zwei verschiedene Arten Partikel auf. Der erste Partikel, bei dem es sich in der Regel um einen Polymerpartikel handelt, weist einen Median des Durchmessers zwischen 10 und 500 µm auf, wogegen der zweite Partikel dadurch gekennzeichnet ist, dass es sich bei diesem um koagulierte Emulsionspolymerisate mit einem Median des Sekundärdurchmessers zwischen 0,5 µm und 80 µm handelt. Bei Verfahrensschritt b) handelt es sich im Wechsel mit Verfahrensschritt a) darauf folgend um das selektive Auftragen eines Bindemittels und das anschließende oder gleichzeitige Verdicken dieses Bindemittels im Pulverbett durch Anquellen des Pulvers und/oder Aushärten.

Bevorzugt ist dabei eine Variante dieses Verfahrens, in dem es sich bei den koagulierten Emulsionspolymerisaten um das sprühgetrocknete Produkt einer Emulsionspolymerisation handelt. Diese Emulsionspolymerisate weisen insbesondere dabei einen Median des Primärdurchmessers zwischen 100 und 800 nm auf. Weiterhin bevorzugt ist dabei, dass die sprühgetrockneten und koagulierten Emulsionspolymerisate mit den ersten Partikeln gemischt werden.
Bevorzugt weist der Sekundärdurchmesser der koagulierten Emulsionspolymerisate einen Median des Durchmessers zwischen 20 und 80 µm auf.
Sprühtrocknen eines Emulsionspolymerisats führt zu Agglomeraten. Beim Untermischen unter PMMA-Suspensionspartikel wurde nun überraschend eine Zunahme der Schüttdichte beobachtet. Dies lässt sich damit erklären, dass zum Teil beobachtet wurde, dass sich ein relevanter Teil des Emulsionspolymerisats in den Zwickeln der Packung der Suspensionspartikel befindet.

Alternativ zu sprühgetrockneten koagulierten Emulsionspolymerisate können auch gefriergetrocknete, koagulierte Emulsionspolymerisate eingesetzt werden.

Alternativ zu den durch Gefriertrocknung koagulierten und sprühgetrockneten Emulsionspolymerisaten ist eine dritte Verfahrensvariante bevorzugt, bei der es sich bei den koagulierten Emulsionspolymerisaten um Partikel handelt, die sich ganz oder teilweise koaguliert auf der Oberfläche der ersten Partikel befinden. Solche Partikel erreicht man beispielsweise durch ein Fällen der Emulsion aus der Polymerisation nach Zugabe der ersten Partikel zu dieser Emulsion und anschließendes Filtrieren und Trocknen der so gefällten Partikelkombination. Besonders bevorzugt wird das Fällen durch Zugabe geeigneter Koagulationshilfsmittel und/oder durch die Änderung des pH-Werts der Emulsion unterstützt.
Bevorzugt weist der Sekundärdurchmesser der koagulierten Emulsionspolymerisate einen Median des Durchmessers zwischen 1 und 5 µm auf.
Bei einer Fällung eines Emulsionspolymerisates in Anwesenheit eines Suspensionspolymerisates koaguliert dieses bevorzugt auf der Oberfläche des Suspensionspolymerisates. Überraschenderweise resultieren daraus nicht geringere, sondern vergleichbare oder sogar höhere Schüttdichten als bei den reinen Suspensionspolymerisaten.
Überraschendweise wurde weiterhin festgestellt, dass selbst bei vergleichbarer Schüttdichte der im erfindungsgemäßen Verfahren eingesetzten Pulverbetten zu reinen Suspensionspolymerisaten nach Beträufeln mit dem Bindemittel Prüfkörper mit geringerer Porosität und höherer mechanischer Stabilität erhalten werden. Dies erklärt sich aus einer Zunahme der Pulveroberfläche und bewirkt, dass mehr Bindemittel auf eine Pulverschicht aufgetragen werden kann, bevor dieses auch - nicht erwünscht - in darunter liegende Schichten des Pulverbetts fließt.

Weiterhin bevorzugt handelt es sich in dem Verfahren bei dem ersten Partikel um einen Polymerpartikel, enthaltend einen zur Aushärtung des Bindemittels geeigneten Initiator oder einen die Aushärtung beschleunigenden Katalysator oder Beschleuniger. Bei den genannten Initiatoren kann es sich beispielsweise um dem Fachmann allgemein bekannte Peroxide oder Azoinitiatoren handeln. Bei den Beschleunigern handelt es sich beispielsweise um Verbindungen, die in Kombination mit einem Initiator, welcher wiederum für sich alleine eine relativ hohe Zerfallstemperatur aufweist, die Zerfallstemperatur dieses Initiators absenkt. Dies ermöglicht, dass schon bei der Umgebungstemperatur im Drucker oder bei einem Temperschritt bis 50 °C die Härtung gestartet wird. Im Falle eines hochzerfallenden Initiators wären dafür zum Beispiel sekundäre oder tertiäre, zumeist aromatische Amine geeignet. Genannte Katalysatoren können eine entsprechende oder ähnliche, aktivierende Wirkung haben. Die genaue Zusammensetzung des Initiatorsystems ist im Allgemeinen für den Fachmann jedoch einfach zu wählen. Besonders bevorzugt handelt es sich bei den ersten Partikeln, bzw. den Polymerpartikeln um PMMA-Suspensionpolymerisate mit einem Median des Durchmessers zwischen 25 und 150 µm, bevorzugt zwischen 30 und 120 µm und besonders bevorzugt zwischen 35 und 100 µm handeln.

Alternativ, zusätzlich oder komplementär dazu kann der zweite Partikel einen zur Aushärtung des Bindemittels geeigneten Initiator oder einen die Aushärtung beschleunigenden Katalysator oder Beschleuniger enthalten. Zusätzlich bedeutet in diesem Fall, dass es sich dabei um die gleiche oder eine ähnliche Verbindung, wie zum Beispiel einen anderen Initiator, wie in den ersten Partikeln handeln kann. Komplementär wiederum bedeutet beispielsweise, dass der erste Partikeln einen Initiator und der zweite Partikel einen Beschleuniger enthält, die durch das jeweilige Anquellen mit dem Bindemittel erst in Kontakt miteinander kommen und dadurch eine Härtereaktion erst starten.

Bei den zweiten Partikeln handelt es sich in dem erfindungsgemäßen Verfahren bevorzugt um acrylatbasierte Emulsionspolymerisate. welche eine Glasübergangstemperatur aufweist, die mindestens 20 °C, bevorzugt mindestens 40 °C unterhalb bestimmten Glasübergangstemperatur des ersten Partikels liegt. Alle Glasübergangstemperaturen werden dabei mittels DSC bestimmt. Der Fachmann weiß dazu, dass die DSC nur ausreichend aussagekräftig ist, wenn nach einem ersten Aufheizzyklus bis zu einer Temperatur, die minimal 25 °C oberhalb der höchsten Glasübergangs- bzw. Schmelztemperatur, dabei jedoch mindestens 20 °C unterhalb der tiefsten Zersetzungstemperatur eines Materials liegt, die Materialprobe für mindestens 2 min bei dieser Temperatur gehalten wird. Danach wird wieder auf eine Temperatur, die mindestens 20 °C unterhalb der tiefsten zu bestimmenden Glasübergangs- oder Schmelztemperatur liegt, abgekühlt, wobei die Abkühlrate maximal 20 °C / min, bevorzugt maximal 10 °C / min betragen sollte. Nach einer weiteren Wartezeit von wenigen Minuten erfolgt dann die eigentliche Messung, bei der mit einer Aufheizrate von in der Regel 10 °C / min oder weniger die Probe bis mindestens 20 °C über die höchste Schmelz- oder Glasübergangstemperatur erhitzt wird. Die jeweiligen höchsten und tiefsten Grenztemperaturen können in einfachen Vormessungen mit einer getrennten Probe grob vorbestimmt werden.

Unabhängig von der Ausführungsform liegt das Gewichtsverhältnis von Emulsionspolymerisat zu Suspensionspolymerisat bevorzugt zwischen 0,1 zu 9,9 und 2 zu 8, bevorzugt zwischen 0,2 zu 9,8 und 1 zu 9.

Durch dieses erfindungsgemäße Verfahren, bei dem Mischungen von Emulsions- und Suspensionspolymerisaten als Pulver für den 3D-Druck eingesetzt werden, entstehen Pulver mit einer Schüttdichte vergleichbar zu Suspensionspolymerisaten. Es ist dabei sogar erfindungsgemäß möglich, höhere Schüttdichten zu erzielen, als diese aus dem Stand der Technik bekannt wären. Gegenüber einfachen Mischungen aus Suspensions- und Emulsionspolymerisaten können durch die Aufbereitung als sprühgetrocknete Emulsionspolymerisate oder durch die Fällung dieser in Anwesenheit eines Suspensionspolymerisates die Schüttdichten überraschend zusätzlich gesteigert werden. Damit werden für das Binder-Jetting 3D-Druckverfahren weitere Vorteile gegenüber dem Stand der Technik realisiert, die beispielsweise in einem schnelleren Auflösen der ersten Partikel und/oder der zweiten bei Kontakt mit dem verdruckten Bindemittel liegen. Dadurch ergibt sich beispielsweise eine schnellere Viskositätszunahme und es kann in kürzerer Zeit, sowie insgesamt mehr Bindemittel appliziert werden. Dadurch ist beispielsweise ein insgesamt besser aufgelöstes Druckbild mit einem besseren Erscheinungsbild der Oberfläche realisierbar.

Weiterhin ergeben sich durch das erfindungsgemäße Verfahren die weiteren Vorteilen einer insgesamt höheren Schüttdichte und damit eines geringeren Volumen, welches mit einem Bindemittel gefüllt werden muss, was wiederum zu einem reduzierten Verzug im gedruckten Objekt führt.

Darüber hinaus ergibt sich durch eine bessere Ausfüllung der nun kleineren Hohlräume, also der Zwickel, zwischen den Polymerpartikeln im Pulverbett eine bessere mechanische Stabilität des gedruckten Objekts. Besonders vorteilhaft ist darüber hinaus, dass diese Vorteile alle kombiniert auftreten.

Weiterhin vorteilhaft ist, dass beide Aufarbeitungsmethoden großtechnisch umsetzbar sind.

Aus einem alternativen, jedoch nicht erfindungsgemäßen Verfahren, bei dem Suspensionspolymerisate mit einfachen Emulsionspolymerisaten, die nicht koaguliert sind, vermischt werden, resultiert eine gegenüber den vorliegenden zwei Varianten des erfindungsgemäßen Verfahrens eine geringe Schüttdichte, was nachteilig für den Druckprozess ist. So führt der Druck in einem solchen Pulverbett zu Produkten mit einem stärkeren Verzug, höherer Porosität und geringerer mechanischer Stabilität. Durch Abmischen zum Beispiel mit PMMA-Suspensionspartikeln mit einem Median des Durchmessers von ca. 60 µm konnte die Schüttdichte zwar leicht erhöht werden, lag aber immer noch unterhalb der des reinen Suspensionspolymerisats. Weiterer Nachteil eines solchen Verfahrens ist darüber hinaus, dass die Aufarbeitung des nicht koagulierten Emulsionspoylmerisats sehr aufwendig ist.

Im Folgenden werden beispielhaft ein paar Ausführungsmöglichkeiten der vorliegenden Erfindung aufgezeigt, ohne dass diese als Limitierung des erfindungsgemäßen Verfahrens zu verstehen sind. Es sind nur Beispiele, die neben vielen anderen alternativen Gestaltungsmöglichkeiten eine effektive Ausführung des erfindungsgemäßen Verfahrens ermöglichen.

Als Suspensionspolymerisate dienen beispielsweise durch radikalische Polymerisation in Anwesenheit von Wasser hergestellte pulverförmige Materialien mit einem volumengemittelten Median des Partikeldurchmessers (d50) zwischen 35 und 100 µm, insbesondere bevorzugt zwischen 30 und 80 µm, ganz besonders bevorzugt zwischen 35 und 60 µm. Bevorzugt handelt es sich bei den Suspensionspolymerisaten um PMMA oder MMA-Copolymerisate. Dazu können die Comonomere beispielsweise aus der Gruppe der Acrylate, Methacrylate und Styrol gewählt werden.

Emulsionspoylmerisate werden zum Beispiel aus durch radikalische Polymerisation in Anwesenheit von Wasser hergestellte Dispersionen erhalten. Das Fällen der zweiten erfindungsgemäßen Ausführungsform der vorliegenden Erfindung erfolgt dabei beispielsweise durch Zusatz geeigneter Koagulationshilfsmittel oder durch Änderung des pH-Wertes. Bevorzugt handelt es sich bei den Emulsionspolymerisaten um PMMA oder MMA-Copolymerisate. Dazu können die Comonomere beispielsweise auch hier aus der Gruppe der Acrylate, Methacrylate und Styrol gewählt werden.

Besonders bewährt hat es sich, wenn die Zusammensetzung der Emulsionspartikel zu einer Glastemperatur führt, die deutlich unterhalb der der Suspensionspartikel liegt, bevorzugt mindestens 20 °C tiefer, besonders bevorzugt mindestens 40 °C tiefer. Dadurch ergibt sich ein besonders schnelles Auflösen der Emulsionspartikel, das zu einer schnellen Viskositätszunahme des Bindemittels führt, was wiederum ein Fluten von tiefer liegenden Pulverschichten im Pulverbett, die nicht verdruckt werden sollen, verhindert.

Zur weiteren Illustration der zweiten Ausführungsform einer Fällung von Emulsionspolymerisaten in Anwesenheit eines Suspensionspolymerisates (SP) sei angemerkt, dass sich beispielsweise ein Verhältnis von ca. 2,5 Gew% Emulsionspolymerisat zu ca. 97,5 Gew% Suspensionspolymerisat als günstig erwiesen hat.

## Patentansprüche

1. Verfahren zur Herstellung von dreidimensionalen Objekten aus einem Pulverbett mittels eines Binder Jetting Verfahrens durch mehrfaches Wiederholen der Verfahrensschritte a) Aufbringen einer Pulverschicht auf der Oberfläche, wobei das Pulverbett mindestens zwei verschiedene Arten Partikel aufweist, wobei der erste Partikel einen Median des Durchmessers zwischen 10 und 500 µm aufweist, **dadurch gekennzeichnet, dass** es sich bei dem zweiten Partikel um koagulierte Emulsionspolymerisate mit einem Median des Sekundärdurchmessers zwischen 0,5 µm und 80 µm handelt, und b) selektive Auftragen eines Bindemittels und das anschließende oder gleichzeitige Verdicken dieses Bindemittels im Pulverbett durch Anquellen des Pulvers und/oder Aushärten.

2. Verfahren gemäß Anspruch 1, **dadurch gekennzeichnet, dass** es sich bei den koagulierten Emulsionspolymerisaten um das sprühgetrocknete Produkt einer Emulsionspolymerisation handelt, dass diese Emulsionspolymerisate einen Median des Primärdurchmessers zwischen 100 und 800 nm aufweisen, und dass die sprühgetrockneten und koagulierten Emulsionspolymerisate mit den ersten Partikeln gemischt werden.

3. Verfahren gemäß Anspruch 1, **dadurch gekennzeichnet, dass** es sich bei den koagulierten Emulsionspolymerisaten um Partikel handeln, die sich durch ein Fällen der Emulsion aus der Polymerisation nach Zugabe der ersten Partikel zu dieser Emulsion und anschließendes Filtrieren und Trocknen ganz oder teilweise koaguliert auf der Oberfläche der ersten Partikel befinden.

4. Verfahren gemäß Anspruch 1, **dadurch gekennzeichnet, dass** es sich bei den koagulierten Emulsionspolymerisaten um das gefriergetrocknete Produkt einer Emulsionspolymerisation handelt, dass diese Emulsionspolymerisate einen Median des Primärdurchmessers zwischen 100 und 800 nm aufweisen, und dass die gefriergetrockneten und koagulierten Emulsionspolymerisate mit den ersten Partikeln gemischt werden.

5. Verfahren gemäß mindestens einem der Ansprüche 1 bis 4, **dadurch gekennzeichnet, dass** es sich bei dem ersten Partikel um einen Polymerpartikel, enthaltend einen zur Aushärtung des Bindemittels geeigneten Initiator oder einen die Aushärtung beschleunigenden Katalysator oder Beschleuniger, handelt.

6. Verfahren gemäß Anspruch 5, **dadurch gekennzeichnet, dass** es sich bei dem Polymerpartikel um ein PMMA-Suspensionspolymerisat mit einem mittleren Durchmesser zwischen 30 und 120 µm handelt.

7. Verfahren gemäß mindestens einem der Ansprüche 1 bis 6, **dadurch gekennzeichnet, dass** es sich bei den zweiten Partikeln um acrylatbasierte Emulsionspolymerisate handelt, welche eine Glasübergangstemperatur, gemessen mittels DSC, aufweist, die mindestens 20 °C, bevorzugt mindestens 40 °C unterhalb der mittels DSC bestimmten Glasübergangstemperatur des ersten Partikels liegt.

8. Verfahren gemäß Anspruch 3, **dadurch gekennzeichnet, dass** das Fällen durch Zugabe geeigneter Koagulationshilfsmittel und/oder die Änderung des pH-Werts der Emulsion unterstützt wird.

9. Verfahren gemäß mindestens einem der Ansprüche 1 bis 8, **dadurch gekennzeichnet, dass** der zweite Partikel einen zur Aushärtung des Bindemittels geeigneten Initiator oder einen die Aushärtung beschleunigenden Katalysator oder Beschleuniger enthält.

10. Verfahren gemäß Anspruch 3, **dadurch gekennzeichnet, dass** der Sekundärdurchmesser der koagulierten Emulsionspolymerisate einen Median des Durchmessers zwischen 1 und 5 µm aufweist.

11. Verfahren gemäß Anspruch 2 oder 4, **dadurch gekennzeichnet, dass** der Sekundärdurchmesser der koagulierten Emulsionspolymerisate einen Median des Durchmessers zwischen 20 und 80 µm aufweist.

12. Verfahren gemäß mindestens einem der Ansprüche 1 bis 11, **dadurch gekennzeichnet, dass** das Gewichtsverhältnis von Emulsionspolymerisat zu Suspensionspolymerisat zwischen 0,1 zu 9,9 und 2 zu 8 liegt.

13. Verfahren gemäß Anspruch 12, **dadurch gekennzeichnet, dass** das Gewichtsverhältnis von Emulsionspolymerisat zu Suspensionspolymerisat zwischen 0,2 zu 9,8 und 1 zu 9 liegt.
